# EUROPÄISCHE PATENTSCHRIFT

(11) **EP 2 732 895 B1**
(45) Veröffentlichungstag und Bekanntmachung des Hinweises auf die Patenterteilung: **21.10.2015**
(21) Anmeldenummer: 12401231.1
(22) Anmeldetag: 14.11.2012
(51) Int. Cl.: B23F 5/22, B23F 17/00, B23F 5/04, B23F 1/02, B23F 1/06, B23F 23/12

(54) **Werkzeugmaschine zur Herstellung von Profilen**
Machine tool for manufacturing profiles
Machine-outil pour la fabrication de profilés

(43) Veröffentlichungstag der Anmeldung: 21.05.2014
(73) Patentinhaber: Burri Werkzeugmaschinen GmbH & Co. KG, 78667 Villingendorf (DE)
(72) Erfinder:
(74) Vertreter: Klocke, Peter

(56) Entgegenhaltungen:
- JP-A- 2002 103 139
- US-A- 4 961 289
- US-A1- 2003 113 177
- US-A1- 2009 227 182
- US-A1- 2010 304 642
- US-A1- 2012 225 614

## Beschreibung

Die Erfindung betrifft eine Werkzeugmaschine zur Herstellung von Profilen an einem Werkstück mittels eines rotorisch angetriebenen Bearbeitungswerkzeugs durch Wälzschleifen, Profilschleifen, Wälzfräsen und/oder Profilfräsen, mit einem Maschinenbett, das mindestens eine um eine Rotationsachse drehbare Werkstückaufnahmeeinrichtung zum Spannen des Werkstückes und eine Werkstückbearbeitungseinrichtung zur Bearbeitung des Werkstückes, die das Bearbeitungswerkzeug hält und antreibt aufweist, wobei die Werkstückaufnahmeeinrichtung ortsfest und die Werkstückbearbeitungseinrichtung beweglich auf dem Maschinenbett angeordnet ist und wobei die Werkstückbearbeitungseinrichtung von einem Maschinenständer getragen ist, der einen radial senkrecht zu der Rotationsachse der Werkstückaufnahmeeinrichtung verfahrbaren Radialschlitten und einen am Radialschlitten angeordneten parallel zu der Rotationsachse der Werkstückaufnahmeeinrichtung verfahrbaren Hubschlitten aufweist, auf dem ein gegenüber dem Hubschlitten verdrehbarer Drehschlitten angeordnet ist, der sich parallel zu der Rotationsachse der Werkstückaufnahmeeinrichtung erstreckt und die Werkstückbearbeitungseinrichtung schwenkbar trägt, wobei der Maschinenständer einen den Radialschlitten verschiebbar tragenden Schiebeschlitten und das Maschinenbett eine Maschinenständerlineardoppelführung für den Schiebeschlitten aufweist, die den Maschinenständer verrückbar gegenüber der Werkstückaufnahmeeinrichtung führt. Unter Profilen werden in diesem Zusammenhang insbesondere Verzahnungen verstanden.

Derartige Maschinen zum Herstellen von Profilen, insbesondere von Verzahnungen, insbesondere zum Schleifen bzw. Fräsen von Zahnflanken sind in vielfältigen Ausführungsformen aus dem Stand der Technik bekannt. Die Bearbeitung des Werkstückes erfolgt unter Relativbewegung des Bearbeitungswerkzeugs gegenüber dem Werkstück, wobei die Werkstückbearbeitungseinrichtung mit dem Schleif- oder Fräswerkzeug mittels des Radialschlittens und des Hubschlittens in zwei Raumrichtungen bewegbar und der Verzahnungswinkel mittels des Drehschlittens einstellbar ist. Üblicherweise werden diese Maschinen mit abrichtbaren Bearbeitungswerkzeugen betrieben, welche nach der Bearbeitung einer bestimmten Anzahl von Werkstücken mittels einer Bearbeitungswerkzeugprofiliereinrichtung neu abgerichtet werden, um die ursprüngliche Schnittigkeit und das Sollprofil des Bearbeitungswerkzeugs wieder herzustellen. Dies geschieht mit einem feststehenden oder rotierenden Abrichtwerkzeug der Bearbeitungswerkzeugprofiliervorrichtung.

Bei vielen bekannten gattungsgemäßen Werkzeugmaschinen ist die Bearbeitungswerkzeugprofiliervorrichtung nahe oder abseits der Werkstückaufnahmeeinrichtung derart angeordnet, dass die für die Bearbeitung des Werkstücks vorgesehenen Maschinenachsen für das Abrichten gewöhnlich nicht verwendet werden können. Stattdessen muss die relative Hub- und/oder Zustellbewegung des Abrichtwerkzeugs und des Bearbeitungswerkzeugs von eigens dieser Funktion zugeordneten Bewegungsachsen der Maschine erzeugt werden. Diese Bewegungsachsen können dabei an der Bearbeitungswerkzeugprofiliervorrichtung und/oder an der Werkstückbearbeitungseinrichtung vorgesehen sein. Die zusätzlichen Bewegungsachsen führen zu einem relativ komplizierten und kostenintensiven Aufbau solcher Maschinen. Ein zusätzlicher Nachteil ist, dass das Abrichtwerkzeug meist relativ schlecht zugänglich ist, wodurch die Einrichtarbeiten dann unnötig erschwert sind.

Die aus dem Stand der Technik bekannten Verzahnungsschleifmaschinen weisen insbesondere allesamt sehr aufwendige Konstruktionen auf, um die Bearbeitungswerkzeugprofiliervorrichtung gegenüber der Werkstückbearbeitungseinrichtung oder umgekehrt, die Werkstückbearbeitungseinrichtung gegenüber der Bearbeitungswerkzeugprofiliervorrichtung in die Bearbeitungsposition zum Abrichten des Bearbeitungswerkzeuges mittels des Abrichtwerkzeuges der Bearbeitungswerkzeugprofiliervorrichtung zu bringen. Bei Verzahnungsfräs- und Schleifmaschinen sind auch mehrspindelige Werkstückachsen bekannt, d.h. Maschinen mit mindestens zwei Werkstückaufnahmeeinrichtungen, um Rüstzeit einzusparen. Während eine der Spindeln in Arbeitsstellung ist, wird die andere Spindel beladen. Diese Werkstückaufnahmeeinrichtungen sind meistens in einen Rundtisch integriert. Derartige Konstruktionen sind ebenfalls teilweise sehr aufwändig und auch teuer. Dazu wird beispielhaft auf die Druckschriften EP 2 397 249 A1, WO 2012/032941 A1, EP 1 992 439 B1, WO 2011/121822 A1 US 2011/268522 A1, DE 20 2005 020 088 U1, DE 10 2009 048 416 B3 verwiesen, die Verzahnungsmaschinen lehren, sowie auf die Schrift EP 2 029 306 B1, die eine Fräsmaschine ohne Bearbeitungswerkzeugprofiliervorrichtung offenbart. Außerdem sind gattungsgemäße Werkzeugmaschinen in den Druckschriften JP 2002-103139 A und US 2003/113177 A1 offenbart.

Die JP 2002-103139 A offenbart eine Werkzeugmaschine zur Herstellung von Profilen an einem Werkstück mittels eines rotorisch angetriebenen Bearbeitungswerkzeuges durch Wälz- oder Profilschleifen, mit einem Maschinenbett, das mindestens eine um eine Rotationsachse drehbare Werkstückaufnahmeeinrichtung zum Spannen des Werkstückes und eine Werkstückbearbeitungseinrichtung zur Bearbeitung des Werkstückes aufweist, die das Bearbeitungswerkzeug hält und antreibt, wobei die Werkstückaufnahmeeinrichtung ortsfest an dem Maschinenbett angeordnet ist. Die Werkstückbearbeitungseinrichtung ist von einem Maschinenständer getragen, der einen radial senkrecht zu der Rotationsachse der Werkstückaufnahmeeinrichtung verfahrbaren Radialschlitten und einen an dem Radialschlitten angeordneten verfahrbaren Hubschlitten aufweist, auf dem ein gegenüber dem Hubschlitten verdrehbarer Drehschlitten angeordnet ist. Der Drehschlitten trägt die Werkstückbearbeitungseinrichtung schwenkbar. Die Drehachse des Drehschlittens erstreckt sich senkrecht zu der Rotationsachse der Werkstückaufnahmeeinrichtung. Der Maschinenständer weist einen den Radialschlitten verschiebbar tragenden Schiebeschlitten und das Maschinenbett eine Maschinenständerlineardoppelführung für den Schiebeschlitten auf, die den Maschinenständer in Erstreckungsrichtung der Rotationsachse der Werkstückaufnahmeeinrichtung längs der drehbaren Werkstückaufnahmeeinrichtung verrückbar führt.

Die US 2003/113177 A1 lehrt Verfahren zum spanenden Bearbeiten im wesentlichen zylindrischer, innen- oder aussenverzahnter Zahnräder, bei dem das Werkstück nicht exakt auf der Bearbeitungsmaschine ausgerichtet ist, bei dem also die Radführungsachse, die später im Getriebe eine Drehachse bildet, nicht mit der Drehachse auf der Bearbeitungsmaschine zusammenfällt und demzufolge bei drehendem Tisch bzw. drehender Werkstückspindel die Radführungsachse um die Drehachse taumelt, wobei die Lage der Radführungsachse zur Drehachse der Bearbeitungsmaschine bestimmt und die Verzahnung um die Radführungsachse erzeugt wird. Die dazu verwendete Werkzeugmaschine weist ein Gestell auf, das aus einem Tisch- und einem Ständerunterteil besteht, auf dem ein Radialschlitten in X-Richtung verfahrbar ist. Der Radialschlitten trägt einen Axialschlitten, der in Z-Richtung verfahrbar ist. Auf dem Axialschlitten befindet sich ein Schwenkkopf, der um eine Achse A schwenkbar ist. Der Schwenkkopf trägt ein Bearbeitungswerkzeug mit einem entsprechenden Antrieb, mit dem das Werkzeug um seine Rotationsachse drehbar ist. Das Werkzeug ist in Richtung seiner Achse, also in Y-Richtung, verschiebbar. Auf dem Tischunterteil befindet sich der Tisch, der um die C-Achse drehbar ist und auf dem das zu bearbeitende Werkstück aufgenommen wird.

Davon ausgehend liegt der Erfindung die Aufgabe zugrunde, eine gattungsgemä-ße Werkzeugmaschine zur Herstellung von Profilen vorzuschlagen, bei der die aus dem Stand der Technik bekannten und vorstehend beschriebenen Nachteile vermieden werden. Zudem soll die Möglichkeit berücksichtig werden, eine beliebige Anzahl von Werkstückaufnahmeeinrichtungen, Bearbeitungswerkzeugprofiliervorrichtungen und Maschinenständern mit Werkstückbearbeitungseinrichtung in das Maschinenbett zu integrieren, ohne dass mehr, kompliziertere sowie teurere Konstruktionen notwendig sind, als bei einer Werkzeugmaschine mit nur einer Werkstückaufnahmeeinrichtung, einer Bearbeitungswerkzeugprofiliervorrichtung und einem Maschinenständer mit Werkstückbearbeitungseinrichtung.

Diese Aufgabe wird erfindungsgemäß durch eine Werkzeugmaschine zur Herstellung von Verzahnungen mit den Merkmalen des Anspruchs 1 gelöst. Weitere vorteilhafte Ausgestaltungen sind den darauf rückbezogenen Ansprüchen zu entnehmen.

Danach ist bei der erfindungsgemäßen Werkzeugmaschine, die ein Maschinenbett mit einer Maschinenständerlineardoppelführung aufweist, die den Maschinenständer gegenüber dem an der Werkstückaufnahmeeinrichtung angeordneten Werkstück tangential verrückbar längs der Werkstückaufnahmeeinrichtung und der Bearbeitungswerkzeugprofiliervorrichtung führt, der Schiebeschlitten als Tangentialschlitten ausgebildet, den die Maschinenständerlineardoppelführung senkrecht und tangential verrückbar gegenüber der Rotationsachse längs der Werkstückaufnahmeeinrichtung führt. Dabei ist der an dem Radialschlitten angeordnete Hubschlitten parallel zu der Rotationsachse der Werkstückaufnahmeeinrichtung verfahrbar, wobei auf dem Maschinenbett eine Bearbeitungswerkzeugprofiliervorrichtung angeordnet ist, die ein Abrichtwerkzeug zum periodischen Abrichten des Bearbeitungswerkzeugs aufweist. Die Bearbeitungswerkzeugprofiliervorrichtung ist seitlich in Erstreckungsrichtung der Maschinenständerlineardoppelführung neben der Werkstückaufnahmeeinrichtung von dieser beabstandet angeordnet, wobei die Maschinenständerlineardoppelführung eine Länge aufweist, die mindestens dem seitlichen Abstand der Bearbeitungswerkzeugprofiliervorrichtung zu der Werkstückaufnahmeeinrichtung entspricht.

Der Maschinenständer ist mittels des Tangentialschlittens längs der Maschinenständerlineardoppelführung gesteuert verschiebbar. Der Tangentialschlitten trägt den Radialschlitten senkrecht zu der Maschinenständerlineardoppelführung verstellbar. Damit ist die Werkstückbearbeitungseinrichtung und das von dieser drehbar aufgenommene und antreibbare Bearbeitungswerkzeug über den Tangential-, Radial- und Hubschlitten gegenüber der Werkstückaufnahmeeinrichtung in allen drei Raumrichtungen beliebig positionierbar. Die drei Schlitten definieren drei Bewegungsachsen des Maschinenständers, die ein X-Y-Z-Orthogonalsystem bilden.

Optional kann an der Werkzeugmaschine auf dem Maschinenbett eine Bearbeitungswerkzeugprofiliervorrichtung angeordnet sein, die ein Abrichtwerkzeug zum periodischen Abrichten des Bearbeitungswerkzeugs aufweist. Eine derartige Bearbeitungswerkzeugprofiliervorrichtung ist bei reinen Werkzeugfräsmaschinen nicht vorgesehen, jedoch bei reinen Werkzeugschleifmaschinen oder kombinierten Werkzeugschleiffräsmaschinen vorhanden.

Dabei kann über den Drehschlitten des Hubschlittens der Anstellwinkel des Bearbeitungswerkzeugs gegenüber dem Ausrichtwerkzeug fürs Abrichten bedarfsgerecht eingestellt werden. Unabhängig vom Anstellwinkel ist das Bearbeitungswerkzeug in X-Y- und Z-Richtung relativ zu dem Abrichtwerkzeug bewegbar. Die Bearbeitungswerkprofiliervorrichtung benötigt somit keine eigenen Bewegungsachsen für das Abrichtwerkzeug in den entsprechenden Richtungen. Die ortsfeste Bearbeitungswerkzeugprofiliervorrichtung ohne Bewegungsachsen ermöglicht eine kostengünstige Herstellung dieser Ausführungsform. Es ist selbstverständlich, dass die Maschinenständerlineardoppelführung eine Länge aufweist, die mindestens dem seitlichen Abstand der Bearbeitungswerkzeugprofiliervorrichtung zu der Werkstückaufnahmeeinrichtung entspricht. Idealerweise ist sie jedoch deutlich länger ausgeführt. Weiterer Vorteil ist, dass für das Abrichten des Bearbeitungswerkzeugs mit Hilfe des Abrichtwerkzeugs die beiden ohnehin vorhandenen Bewegungsachsen des Radialschlittens und des Hubschlittens unverändert verwendet werden können, sodass erfindungsgemäß keine zusätzliche Bewegungsachse notwendig ist. Als dritte Bewegungsachse kann hierfür die verlagerte dritte Bewegungsachse der Werkstückbearbeitungseinrichtung, die von der Maschinenständerlineardoppelführung und dem Tangentialschlitten gebildet ist, verwendet werden. Dies vereinfacht den Aufbau der neu vorgeschlagenen Werkzeugmaschine und führt somit zu günstigeren Herstellkosten und zu einer sehr steifen Konstruktion.

Die Bearbeitungswerkzeugprofiliervorrichtung, die seitlich neben der Werkstückaufnahmeeinrichtung, von dieser beabstandet vorgesehen ist, ist vorzugsweise auf der gleichen Höhe wie das zu bearbeitende Werkstück angeordnet. Idealerweise sind dabei bei einer bevorzugten Ausführungsform der Erfindung die Bearbeitungswerkzeugprofiliervorrichtung und die Werkstückaufnahmeeinrichtung in gleicher Entfernung zu der Maschinenständerlineardoppelführung angeordnet. Damit kann der Radialschlitten des Maschinenständers das Bearbeitungswerkzeug schnell und problemlos dem Abrichtwerkzeug für den Abrichtvorgang zustellen.

Bei einer bevorzugten Ausführungsform der erfindungsgemäßen Werkzeugmaschine ist die mindestens eine Bearbeitungswerkzeugprofiliervorrichtung zwischen zwei Werkstückaufnahmeeinrichtungen angeordnet. In diesem Fall erstreckt sich die Maschinenständerlineardoppelführung in der Länge natürlich zumindest entsprechend dem Abstand der beiden Werkstückaufnahmeeinrichtungen parallel zu diesen. Der die Werkstückbearbeitungseinrichtung tragende beweglich geführte Maschinenständer kann somit wechselweise der jeweiligen Werkstückaufnahmeeinrichtung mit dem gespannten Werkstück für die Bearbeitung des Werkstückes und der Bearbeitungswerkzeugprofiliervorrichtung für das Abrichten des Bearbeitungswerkzeugs direkt gegenüberliegend positioniert werden. Während der Bearbeitung des Werkstückes an einer der Werkstückaufnahmeeinrichtungen kann an der anderen Werkstückaufnahmeeinrichtung gleichzeitig ein Rüstvorgang stattfinden. Dies ermöglicht einen unterbrechungsfreien Betrieb der Werkzeugmaschine. Dabei ist es nicht zwingend erforderlich, dass die Bearbeitungswerkzeugprofiliervorrichtung zwischen den beiden Werkstückaufnahmeeinrichtungen angeordnet ist. Sie kann stattdessen auch rechts oder links von den beiden Werkstückaufnahmeeinrichtungen auf dem Maschinenbett positioniert sein.

Erfindungsgemäß erfolgt die Bewegung des Bearbeitungswerkzeugs für die Schrägverzahnung schräg zu der Rotationsachse der Werkstückaufnahmeeinrichtung vorzugsweise durch Bewegen des Tangentialschlittens längs der Maschinenständerlineardoppelführung und des vom Radialschlitten getragenen Hubschlittens senkrecht zu dem Tangential- und Radialschlitten. Die Bearbeitungsbewegung des Bearbeitungswerkzeugs wird dabei durch entsprechende Steuerung des Tangential- und des Hubschlittens bewirkt, um alle möglichen Schrägungswinkel der Verzahnung für ein Werkstück sowie des jeweiligen Steigungswinkels des Bearbeitungswerkzeugs an dem Werkstück abzubilden.

Generell können auf dem Maschinenbett der erfindungsgemäßen Werkzeugmaschine eine beliebige Anzahl von Werkstückaufnahmeeinrichtungen mit einer oder mehreren daneben positionierten Bearbeitungswerkzeugprofiliervorrichtungen und auch von Maschinenständern mit jeweils einer Werkstückbearbeitungseinrichtung angeordnet sein. Wichtig ist dabei, dass die mindestens zwei Werkstückaufnahmeeinrichtungen und die mindestens eine Bearbeitungswerkzeugprofiliereinrichtung eine Reihe bilden, die sich parallel zu der Maschinenständerlineardoppelführung erstreckt, auf der alle vorhandenen Maschinenständer mit ihren Werkstückbearbeitungseinrichtungen gegenüber der Reihe längsverschiebbar angeordnet sind. Es ist dabei selbstverständlich, dass die Maschinenständerlineardoppelführung eine Länge aufweist, die ein Verrücken aller vorgesehenen Maschinenständer zu jeder der vorhandenen Werkstückaufnahmeeinrichtungen bzw. Bearbeitungswerkzeugprofiliervorrichtungen ermöglicht. Weiterhin kann grundsätzlich die mindestens eine Werkstückbearbeitungseinrichtung mehrere Bearbeitungswerkzeuge tragen und antreiben und die mindestens eine Werkzeugprofiliervorrichtung auch mehr als ein Abrichtwerkzeug aufweisen.

Damit wird das Ziel der Erfindung erreicht, eine Werkzeugmaschine vorzuschlagen, bei der eine oder mehrere Bearbeitungswerkzeugprofiliervorrichtungen und/oder eine oder mehrere Werkstückaufnahmeeinrichtungen in Verbindung mit einem oder mehreren Maschinenständern ohne zusätzliche Drehtische oder eine sonstige aufwändige Mechanik sehr einfach, stabil und kostengünstig in die Maschine integriert sind. Bei einer solchen Werkzeugmaschine mittels dem Tangentialschlitten und der Maschinenständerlineardoppelführung können beliebig viele Werkstückaufnahmeeinrichtungen, Bearbeitungswerkzeugprofiliervorrichtungen sowie Maschinenständer mit Werkstückbearbeitungseinrichtung nebeneinander in das Maschinenbett integriert werden, die nur durch Verlängerung der Maschinenständerlineardoppelführung in der Y-Achse angefahren werden können, ohne dass zusätzliche Maschinenachsen und oder komplizierte teure Konstruktionen notwendig sind.

Nachfolgend wird die Erfindung einiger in der Zeichnung dargestellter Ausführungsbeispiele näher erläutert. Weitere Merkmale der Erfindung ergeben sich aus der folgenden Beschreibung der Ausführungsbeispiele der Erfindung in Verbindung mit den Ansprüchen und der beigefügten Zeichnung. Die einzelnen Merkmale der Erfindung können dabei für sich allein oder zu mehreren bei unterschiedlichen Ausführungsformen der Erfindung verwirklicht sein. Es zeigen:
- Figur 1: eine erfindungsgemäße Werkzeugmaschine mit einer Werkstückaufnahmeeinrichtung, einer Bearbeitungswerkzeugprofiliereinrichtung und einem Maschinenständer mit einer Werkstückbearbeitungseinrichtung;
- Figur 2: eine erfindungsgemäße Werkzeugmaschine mit zwei Werkstückaufnahmeeinrichtungen, einer zwischen den Werkstückaufnahmeeinrichtungen angeordneten Bearbeitungswerkzeugprofiliereinrichtung und einem Maschinenständer mit einer Werkstückbearbeitungseinrichtung; und
- Figur 3: eine erfindungsgemäße Werkzeugmaschine mit zwei Werkstückaufnahmeeinrichtungen, einer links von den beiden Werkstückaufnahmeeinrichtungen angeordneten Bearbeitungswerkzeugprofiliereinrichtung und einem Maschinenständer mit Werkstückbearbeitungseinrichtung.

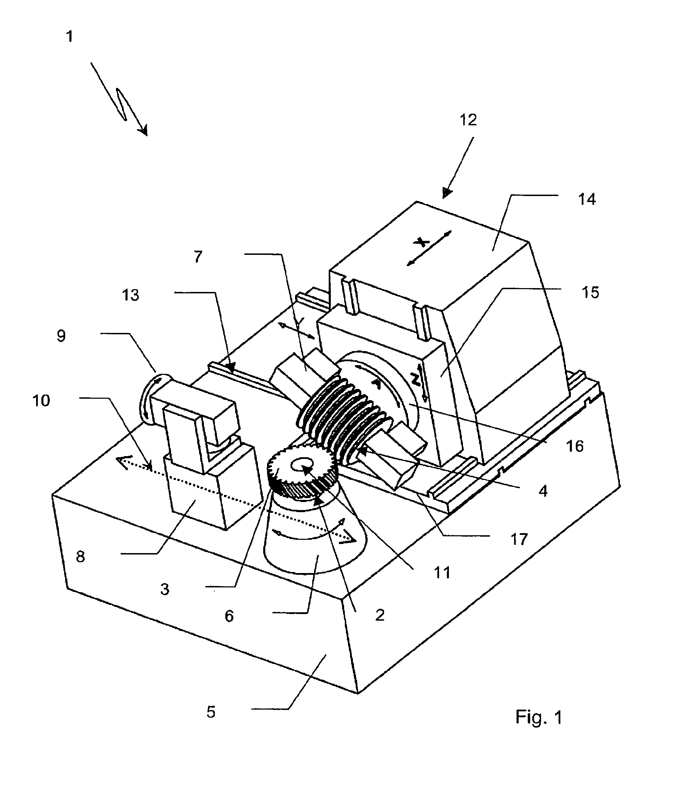

Die Figur 1 zeigt in perspektivischer Darstellung ein erstes Ausführungsbeispiel der erfindungsgemäßen Werkzeugmaschine 1 zur Herstellung von Verzahnungen 2 an einem Werkstück 3 mittels eines rotorisch angetriebenen Bearbeitungswerkzeugs 4 durch Wälzschleifen, Profilschleifen oder Wälzfräsen. Die Werkzeugmaschine 1 weist ein Maschinenbett 5 auf, auf dem eine Werkstückaufnahmeeinrichtung 6 zum Spannen und Drehen des Werkstückes 3 sowie eine Werkstückbearbeitungseinrichtung 7 zur spanenden Bearbeitung des von der Werkstückaufnahmeeinrichtung 6 aufgenommenen Werkstücks 3 angeordnet ist. Die Werkstückbearbeitungseinrichtung 7 trägt und treibt das Bearbeitungswerkzeugs 4 für das Werkstück 3 an. Links neben der Werkstückaufnahmeeinrichtung 6 mit dem Werkstück 3 ist eine Bearbeitungswerkzeugprofiliervorrichtung 8 angeordnet, die ein Abrichtwerkzeug 9 zum periodischen Abrichten und Profilieren des Bearbeitungswerkzeugs 4 aufweist. Die Werkstückaufnahmeeinrichtung 6 und die Bearbeitungswerkzeugprofiliervorrichtung 8 bilden eine Reihe 10.

Die Werkstückaufnahmeeinrichtung 6 und die Bearbeitungswerkzeugprofiliervorrichtung 8 sind seitlich voneinander beabstandet und ortsfest an dem Maschinenbett 5 befestigt. Das Abrichtwerkzeug 9 ist auf eine sich in Längsrichtung der Reihe 10 erstreckenden in der Figur nicht sichtbaren motorisch angetriebenen Drehwelle aufgenommen. Die Werkstückaufnahmeeinrichtung 6 weist eine zentrale Rotationsachse 11 auf, die orthogonal zu dem Maschinenbett 5 ausgerichtet ist, wobei die Werkstückaufnahmeeinrichtung 6 das zu bearbeitende Werkstück 3 um die Rotationsachse 11 drehbar trägt. Die Werkstückbearbeitungseinrichtung 7 ist an einem Maschinenständer 12 angeordnet, der in Querrichtung der Reihe 10, in der dargestellten Bearbeitungsstellung für das Werkstück 3, unmittelbar neben der Werkstückaufnahmeeinrichtung 6 mit radialem Abstand zu der Werkstückaufnahmeeinrichtung 6 positioniert ist. Der Maschinenständer 12 ist auf einer Maschinenständerlineardoppelführung 13, die parallel zu der von der Werkstückaufnahmeeinrichtung 6 und der Bearbeitungsprofiliereinrichtung 8 bestimmten Reihe 10 verläuft, in Längsrichtung der Reihe 10 von der Werkstückaufnahmeeinrichtung 6 zu der Bearbeitungswerkzeugprofiliervorrichtung 8 und umgekehrt verrückbar.

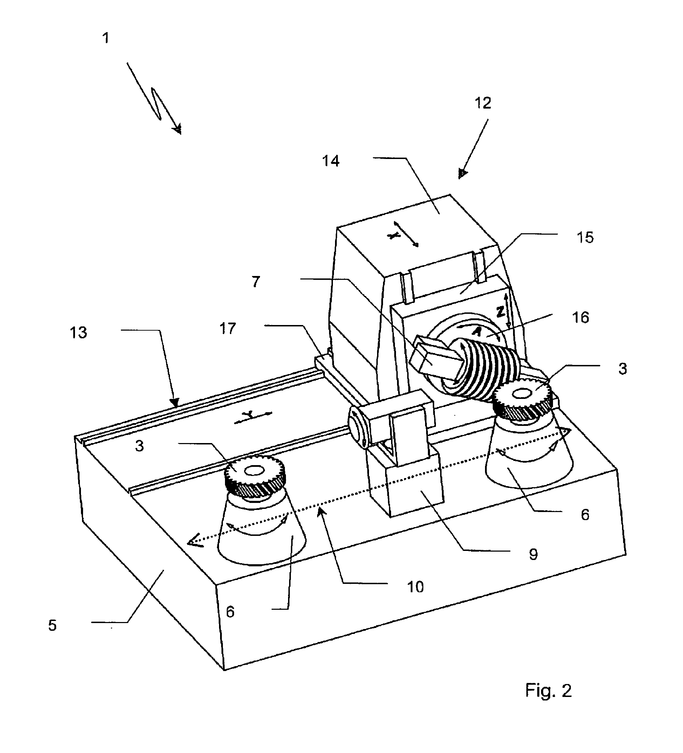

Der Maschinenständer 12 weist einen Radialschlitten 14 auf, der radial senkrecht gegenüber der Rotationsachse 11 der Werkstückaufnahmeeinrichtung 6 zu der Werkstückaufnahmeeinrichtung 6 und damit zu dem Werkstück 3 hin und umgekehrt verfahrbar ist. Der Radialschlitten 14 trägt einen Hubschlitten 15, der parallel zu der Rotationsachse 11 der Werkstückaufnahmeeinrichtung 6 nach oben vom Maschinenbett 5 weg und in entgegengesetzter Richtung bewegbar ist. Der Hubschlitten 15 trägt wiederum einen Drehschlitten 16, auf dem die Werkstückbearbeitungseinrichtung 7 mit dem Bearbeitungswerkzeug 4 in der horizontalen Neigung verschwenkbar angeordnet ist. Der Radialschlitten 14 ist seinerseits auf einem Tangentialschlitten 17 verschiebbar gelagert, der von der Maschinenständerlineardoppelführung 13 entlang der Reihe 10 verrückbar geführt ist. Die Bewegungsachsen X, Y, Z des Radialschlittens 14, des Tangentialschlittens 17 bzw. des Hubschlittens 15 bilden ein kartesisches System. Durch eine abgestimmte Bewegung der Schlitten 14, 15, 17 kann das Bearbeitungswerkzeug 4, dessen Neigungswinkel gegenüber dem Maschinenbett 5 und dem Maschinenständer 12 durch Drehen des Drehschlittens 16 in Umfangsrichtung A beliebig einstellbar ist, im Hinblick auf das Werkstück 3 und dem Abrichtwerkzeug 9 in jeder gewünschten Richtung bzw. entlang einer bestimmbaren Bahn geführt werden, um das Werkstück 3 zu bearbeiten oder das Bearbeitungswerkzeug 9 abzurichten. Die Figur 2 zeigt eine weitere Ausführungsform der erfindungsgemäßen Werkzeugmaschine 1 mit zwei Werkstückaufnahmeeinrichtungen, einer Bearbeitungswerkzeugprofiliervorrichtung 8 und einem Maschinenständer 12 mit einer Werkstückbearbeitungseinrichtung 7. Dabei ist die Bearbeitungswerkzeugprofiliereinrichtung 8 zwischen den beiden Werkstückaufnahmeeinrichtungen 6 angeordnet. Die beiden Werkstückaufnahmeeinrichtungen 6 und die Bearbeitungswerkzeugprofiliervorrichtung 8 sind entsprechend dem in der Figur 1 dargestellten und vorstehend beschriebenen ersten Ausführungsbeispiel der erfindungsgemäßen Werkzeugmaschine ausgebildet. Diese bilden wiederum eine Reihe 10, zu der sich die Maschinenständerlineardoppelführung 13, die den Maschinenständer 12 verrückbar trägt, mit seitlichem Abstand parallel erstreckt. Der Maschinenständer 12 selbst ist auch identisch zu dem ersten Ausführungsbeispiel mit einem Tangentialschlitten 17, einem Radialschlitten 14, einem Hubschlitten 15 und einem Drehschlitten 16 ausgeführt. Die beiden Werkstücke 3 auf den zwei Werkstückaufnahmeeinrichtungen 6 werden wechselweise mittels der am Drehschlitten 16 des Maschinenständers 12 angeordneten Werkstückbearbeitungseinrichtung 7 mit dem Bearbeitungswerkzeug 4 nacheinander bearbeitet. Die Bearbeitungswerkzeugprofiliervorrichtung 8 wird unabhängig davon, welches der beiden Werkstücke 3 gerade mittels des Bearbeitungswerkzeugs 4 bearbeitet wird oder bearbeitet werden soll, bei Bedarf genutzt.

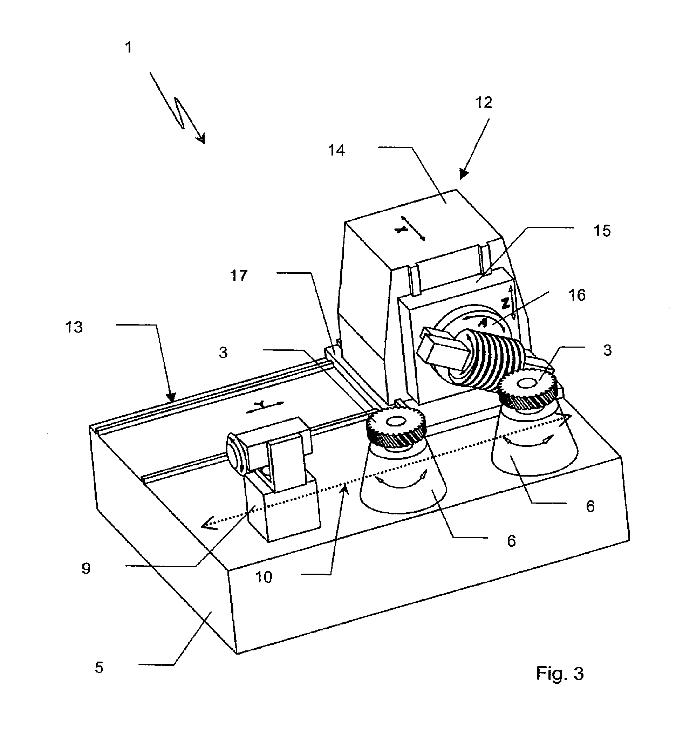

Die Figur 3 zeigt eine Abwandlung des in der Figur 2 dargestellten zweiten Ausführungsbeispiels der Erfindung als weiteres Ausführungsbeispiel. In diesem Fall sind die beiden Werkstückaufnahmeeinrichtungen 6 direkt benachbart zueinander angeordnet, wobei die Bearbeitungswerkzeugprofiliervorrichtung 8 auf der der anderen Werkstückaufnahmeeinrichtung 6 abgewandten Seite außen neben der linken Werkstückaufnahmeeinrichtungen 6 positioniert ist. Der sonstige Aufbau dieser Werkzeugmaschine 1 unterscheidet sich nicht von dem des vorstehend beschriebenen zweiten Ausführungsbeispiels der Erfindung.

Die Figur 1 zeigt die Erfindung am Beispiel einer Verzahnungsmaschine 1, die das Werkstück 3 durch Wälzschleifen, Profilschleifen allein oder kombiniert mit Wälzfräsen und Profilfräsen bearbeitet, und entsprechend mit einer Bearbeitungswerkzeugprofiliervorrichtung 8. Diese ist naturgemäß bei Profiliermaschinen, die das Werkstück 3 allein durch Wälzfräsen und Profilfräsen bearbeiten, nicht notwendig. Eine erfindungsgemäße Werkzeugmaschine 1 zur Herstellung von Profilen 2 an dem Werkstück 3 mittels eines rotorisch angetriebenen Bearbeitungswerkzeugs 4 durch Wälzfräsen und/oder Profilfräsen ist in der beigefügten Zeichnung nicht dargestellt. Sie ergibt sich jedoch in naheliegender Weise, indem die Bearbeitungswerkzeugprofiliervorrichtung 8 aus der Figur 1 entfernt wird.

## Patentansprüche

1. Werkzeugmaschine (1) zur Herstellung von Profilen (2) an einem Werkstück (3) mittels eines rotorisch angetriebenen Bearbeitungswerkzeugs (4) durch Wälzschleifen, Profilschleifen, Wälzfräsen und/oder Profilfräsen, mit einem Maschinenbett (5), das mindestens eine um eine Rotationsachse (11) drehbare Werkstückaufnahmeeinrichtung (6) zum Spannen des Werkstücks (3) und eine Werkstückbearbeitungseinrichtung (7) zur Bearbeitung des Werkstücks (3), die das Bearbeitungswerkzeug (4) hält und antreibt, aufweist, wobei die Werkstückaufnahmeeinrichtung (6) ortsfest und die Werkstückbearbeitungseinrichtung (7) beweglich auf dem Maschinenbett (5) angeordnet ist und wobei die Werkstückbearbeitungseinrichtung (7) von einem Maschinenständer (12) getragen ist, der einen radial senkrecht zu der Rotationsachse (11) der Werkstückaufnahmeeinrichtung (6) verfahrbaren Radialschlitten (14) und einen am Radialschlitten (14) angeordneten parallel zu der Rotationsachse (11) der Werkstückaufnahmeeinrichtung (6) verfahrbaren Hubschlitten (15) aufweist, auf dem ein gegenüber dem Hubschlitten (15) verdrehbarer Drehschlitten (16) angeordnet ist, der sich parallel zu der Rotationsachse (11) der Werkstückaufnahmeeinrichtung (6) erstreckt und die Werkstückbearbeitungseinrichtung (7) schwenkbar trägt, wobei der Maschinenständer (12) einen den Radialschlitten (14) verschiebbar tragenden Schiebeschlitten und das Maschinenbett (5) eine Maschinenständerlineardoppelführung (13) für den Schiebeschlitten aufweist, die den Maschinenständer (12) verrückbar gegenüber der Werkstückaufnahmeeinrichtung (6) führt, **dadurch gekennzeichnet, dass** der Schiebeschlitten als Tangentialschlitten (17) ausgebildet ist, den die Maschinenständerlineardoppelführung (13) senkrecht und tangential verrückbar gegenüber der Rotationsachse (11) längs der Werkstückaufnahmeeinrichtung (6) führt, und dass auf dem Maschinenbett (5) eine Bearbeitungswerkzeugprofiliervorrichtung (8) angeordnet ist, die ein Abrichtwerkzeug (9) zum periodischen Abrichten des Bearbeitungswerkzeugs (4) aufweist, wobei die Bearbeitungswerkzeugprofiliervorrichtung (8) seitlich in Erstreckungsrichtung der Maschinenständerlineardoppelführung (13) neben der Werkstückaufnahmeeinrichtung (6) von dieser beabstandet angeordnet ist und wobei die Maschinenständerlineardoppelführung (13) eine Länge aufweist, die mindestens dem seitlichen Abstand der Bearbeitungswerkzeugprofiliervorrichtung (8) zu der Werkstückaufnahmeeinrichtung (6) entspricht.

2. Werkzeugmaschine nach Anspruch 1, **dadurch gekennzeichnet, dass** die Bearbeitungswerkzeugprofiliervorrichtung (8) auf gleicher Höhe wie das zu bearbeitende Werkstück (3) angeordnet ist.

3. Werkzeugmaschine nach Anspruch 1 oder 2, **dadurch gekennzeichnet, dass** die Bearbeitungswerkzeugprofiliervorrichtung (8) und die Werkstückaufnahmeeinrichtung (6) in gleicher Entfernung zu der Maschinenständerlineardoppelführung (13) angeordnet ist.

4. Werkzeugmaschine nach einem der vorstehenden Ansprüche, **dadurch gekennzeichnet, dass** auf dem Maschinenbett (5) wenigstens zwei Werkstückaufnahmeeinrichtungen (6) angeordnet sind.

5. Werkzeugmaschine nach einem der vorstehenden Ansprüche, **dadurch gekennzeichnet, dass** die mindestens eine Bearbeitungswerkzeugprofiliervorrichtung (8) zwischen den zwei Werkstückaufnahmeeinrichtungen (6) angeordnet ist.

6. Werkzeugmaschine nach Anspruch 1, **dadurch gekennzeichnet, dass** die Bewegung des Bearbeitungswerkzeugs (4) für die Schrägverzahnung schräg zu der Rotationsachse (11) der Werkstückaufnahmeeinrichtung (6) derart erfolgt, dass der Tangentialschlitten (17) sich längs der Maschinenständerlineardoppelführung (13) und der Hubschlitten (15) sich senkrecht zu dem Radialschlitten (14) bewegt.

## Claims

1. Machine tool (1) for the production of profiles (2) on a workpiece (3) by means of a rotorically driven machining tool (4) by generating grinding, profile grinding, generating milling and/or profile milling, comprising a machine bed (5), which has at least one workpiece receiving device (6) for tightening the workpiece (3) that can be rotated around an axis of rotation (11), and a workpiece machining device (7) for machining the workpiece (3), which holds and drives the machining tool (4), wherein the workpiece receiving device (6) is stationary and the workpiece machining device (7) is arranged moveably on the machine bed (5), and wherein the workpiece machining device (7) is supported by a machine base (12), which has a radial carriage (14) that can be moved radially perpendicular to the axis of rotation (11) of the workpiece receiving device (6), and a lifting carriage (15) arranged on the radial carriage (14), which is movable parallel to the axis of rotation (11) of the workpiece receiving device (6), on which lifting carriage (15) a rotational carriage (16) is arranged that can be rotated with respect to the lifting carriage (15), which extends parallel to the axis of rotation (11) of the workpiece receiving device (6) and which bears the workpiece machining device (7) swivel-mounted, wherein the machine base (12) comprises a sliding carriage that displaceably bears the radial carriage (14) and the machine bed (5) comprises a machine base linear dual guide (13) for the sliding carriage, which guides the machine base (12) moveably with respect to the workpiece receiving device (6), **characterised in that** the sliding carriage is formed as a tangential carriage (17), which is guided with vertical and tangential displacement with respect to the axis of rotation (11) along the workpiece receiving device (6) by the machine base linear dual guide (13), and **in that** a machining tool profiling device (8) is arranged on the machine bed (5), which device has a dressing tool (9) for the periodic dressing of the machining tool (4), wherein the machining tool profiling device (8) is arranged alongside the workpiece receiving device (6) with separation therefrom, laterally in the expansion direction of the machine base linear dual guide (13), and wherein the machine base linear dual guide (13) has a length that corresponds at least to the lateral separation between the machining tool profiling device (8) and the workpiece receiving device (6).

2. Machine tool according to claim 1, **characterised in that** the machining tool profiling device (8) is arranged at the same height as the workpiece (3) to be machined.

3. Machine tool according to claim 1 or 2, **characterised in that** the machining tool profiling device (8) and the workpiece receiving device (6) are arranged at the same distance from the machine base linear dual guide (13).

4. Machine tool according to one of the preceding claims, **characterised in that** at least two workpiece receiving devices (6) are arranged on the machine bed (5).

5. Machine tool according to one of the preceding claims, **characterised in that** the at least one machining tool profiling device (8) is arranged between the two workpiece receiving devices (6).

6. Machine tool according to claim 1, **characterised in that** the movement of the machining tool (4) for the helical gearing flush to the axis of rotation (11) of the workpiece receiving device (6) takes place in such a way that the tangential carriage (17) moves along the machine base linear dual guide (13) and the lifting carriage (15) moves perpendicular to the radial carriage (14).

## Revendications

1. Machine-outil (1) pour la fabrication de profils (2) sur une pièce (3) au moyen d'un outil d'usinage (4) entraîné en rotation, par rectification par meule-mère, rectification par meule de forme, fraisage par fraise-mère et/ou fraisage par fraise de forme, avec un banc de machine (5) qui présente au moins un dispositif porte-pièce (6) rotatif autour d'un axe de rotation (11) et destiné à serrer la pièce (3), et un dispositif d'usinage de pièce (7) qui est destiné à usiner la pièce (3) et qui maintient et entraîne l'outil d'usinage (4), sachant que le dispositif porte-pièce (6) est disposé à poste fixe et le dispositif d'usinage de pièce (7) à déplacement sur le banc de machine (5) et sachant que le dispositif d'usinage de pièce (7) est porté par une colonne de machine (12) qui présente un chariot radial (14), pouvant être déplacé radialement perpendiculairement à l'axe de rotation (11) du dispositif porte-pièce (6), et un chariot vertical (15), disposé sur le chariot radial (14), pouvant être déplacé parallèlement à l'axe de rotation (11) du dispositif porte-pièce (6) et sur lequel est disposé un chariot rotatif (16), qui est rotatif par rapport au chariot vertical (15), qui s'étend parallèlement à l'axe de rotation (11) du dispositif porte-pièce (6) et qui porte à pivotement le dispositif d'usinage de pièce (7), sachant que la colonne de machine (12) présente un chariot coulissant portant à coulissement le chariot radial (14) et que le banc de machine (5) présente un guide double linéaire de colonne de machine (13) pour le chariot coulissant, qui guide la colonne de machine (12) en déplacement par rapport au dispositif porte-pièce (6), **caractérisée en ce que** le chariot coulissant est réalisé sous forme de chariot tangentiel (17), que le guide double linéaire de colonne de machine (13) guide en déplacement perpendiculairement et tangentiellement par rapport à l'axe de rotation (11) le long du dispositif porte-pièce (6), et **en ce qu'**un dispositif (8) de profilage d'outil d'usinage, qui présente un outil de taille (9) pour tailler périodiquement l'outil d'usinage (4), est disposé sur le banc de machine (5), sachant que le dispositif (8) de profilage d'outil d'usinage est disposé, latéralement dans la direction de développement du guide double linéaire de colonne de machine (13), à côté du dispositif porte-pièce (6) et à distance de ce dernier, et sachant que le guide double linéaire de colonne de machine (13) présente une longueur qui correspond au moins à la distance latérale entre le dispositif (8) de profilage d'outil d'usinage et le dispositif porte-pièce (6).

2. Machine-outil selon la revendication 1, **caractérisée en ce que** le dispositif (8) de profilage d'outil d'usinage est disposé à la même hauteur que la pièce (3) à usiner.

3. Machine-outil selon la revendication 1 ou 2, **caractérisée en ce que** le dispositif (8) de profilage d'outil d'usinage et le dispositif porte-pièce (6) sont disposés à la même distance du guide double linéaire de colonne de machine (13).

4. Machine-outil selon l'une des revendications précédentes, **caractérisée en ce qu'**au moins deux dispositifs porte-pièce (6) sont disposés sur le banc de machine (5).

5. Machine-outil selon l'une des revendications précédentes, **caractérisée en ce que** le dispositif au moins unique (8) de profilage d'outil d'usinage est disposé entre les deux dispositifs porte-pièce (6).

6. Machine-outil selon la revendication 1, **caractérisée en ce que** le déplacement de l'outil d'usinage (4) pour une denture hélicoïdale s'effectue en oblique par rapport à l'axe de rotation (11) du dispositif porte-pièce (6) de telle sorte que le chariot tangentiel (17) se déplace le long du guide double linéaire de colonne de machine (13) et le chariot vertical (15) perpendiculairement au chariot radial (14).
